# EUROPEAN PATENT SPECIFICATION

(11) **EP 2 839 922 B1**
(45) Date of publication and mention of the grant of the patent: **20.07.2016**
(21) Application number: 14181334.5
(22) Date of filing: 19.08.2014
(51) Int. Cl.: B23Q 1/01, B23Q 11/08, B23Q 41/04

(54) **MACHINE TOOL AND MACHINING LINE INCLUDING PLURAL MACHINE TOOLS**
WERKZEUGMASCHINE UND FERTIGUNGSSTRAßE MIT MEHREREN WERKZEUGMASCHINEN
MACHINE-OUTIL ET LIGNE D'USINAGE COMPRENANT PLUSIEURS MACHINES-OUTILS

(30) Priority: 19.08.2013 JP 2013169393
(43) Date of publication of application: 25.02.2015
(73) Proprietor: DMG Mori Seiki Co. Ltd., Nara 639-1160 (JP)
(72) Inventor: Okuyama, Yoshinobu, Nara, Nara 639-1160 (JP); Kashiwagi, Satoru, Nara, Nara 639-1160 (JP); Nagasue, Hideki, Nara, Nara 639-1160 (JP)
(74) Representative: Grünecker Patent- und Rechtsanwälte PartG mbB

(56) References cited:
- EP-A1- 2 777 871
- WO-A1-2014/057834
- DE-C1- 3 730 984

## Description

### BACKGROUND OF THE INVENTION

### 1. FIELD OF THE INVENTION

The present invention relates to a machine tool including: a machine main body having a workpiece machining part and a workpiece changing part; and a workpiece preparation part which loads/unloads a workpiece to/from the workpiece changing part, and to a machining line including the plural machine tools.

### 2. DESCRIPTION OF THE RELATED ART

A machine tool generally has a structure in which two openings are provided in a machine body cover surrounding a machine main body, and the openings are opened/closed by doors, but there is a concern about a problem that, depending on arrangement positions of these two doors, operators accessing these doors are likely to interfere with each other.

In order to avoid such a problem, Patent Document 1, for example, discloses that a front door is provided on a front surface of the machine body cover, a side door is provided on its side surface, and from one of the doors, for example, a workpiece machining part is accessible and from the other door, for example, a workpiece can be attached/detached to/from a workpiece changing part.

[Patent Document] Japanese Patent Application Laid-open No. Hei 05-96433

In the conventional apparatus described in the aforesaid Patent Document 1, since an operator performing a work of attaching/detaching a workpiece to/from the workpiece changing part and an operator accessing the workpiece machining part are at positions not adjacent to each other, it is possible to avoid the interference between the both operators. However, when the plural machine tools are arranged in parallel to form a machining line, a space for an operator's work such as accessing the inside of the machine from the side door of the machine main body has to be reserved between the adjacent machine tools, which gives rise to a problem that an interval between the machine tools arranged in parallel becomes wide and as a result the machining line becomes long.

### SUMMARY OF THE INVENTION

Therefore, the present applicant has proposed a machine tool in which a surface that an operator faces when accessing a workpiece machining part of a machine main body and a surface that an operator faces when preparing a workpiece are arranged so as to obliquely intersect with each other. Specifically, in the machine tool according to this proposal, a corner portion of the machine main body having a roughly rectangular shape is cut out to thereby reserve a work space used when the workpiece machining part is accessed

Since the work space is thus reserved by cutting out the corner portion of the machine main body, it is possible to dispose the adjacent machine tools close to each other, which makes it possible to avoid the problem that the interval between the machine tools arranged in parallel becomes wide.

Meanwhile, the present applicant has developed a machine tool in which a workpiece preparation part which loads/unloads a workpiece to/from the workpiece changing part is added opposite the work space formed by cutting out the corner portion, across the machine main body, thereby making it possible to easily and surely execute the loading/unloading works of workpieces to/from the workpiece changing part.

Incidentally, when the machine tools according to the aforesaid development are arranged in parallel, providing the workpiece preparation part unavoidably makes the interval between the machine main bodies arranged in parallel wider than when the workpiece preparation part is not provided, and depending on the arrangement positions and sizes of the work space and the workpiece preparation part, there may occur problems that the interval becomes wider by an amount more than that directly caused by the provision of the workpiece preparation part, and accessibility especially to a rear side of the workpiece preparation part or a rear side of the machine main body by an operator becomes worse.

It is an object of the present invention to provide a machine tool which has the workpiece preparation part disposed opposite the work space across the machine main body, yet is capable of preventing accessibility to the rear sides of the workpiece preparation part and the machine main body by an operator from becoming worse or preventing the interval between the machines arranged in parallel from increasing by an amount more than that caused by the provision of the workpiece preparation part, and to provide a machining line including a plurality of the machine tools.

A first embodiment of the invention is a machine tool including: a machine main body having a machining part which applies machining to a workpiece and a workpiece changing part which attaches/detaches the workpiece to/from the machining part; and a workpiece preparation part which loads/unloads the workpiece to/from the workpiece changing part,
wherein the machine main body has a roughly rectangular shape having front and rear side surfaces and left and right side surfaces, and has a work space where an operator accesses the machining part, the work space being formed by cutting out a corner portion between the front side surface and one side surface out of the left and right side surfaces,
wherein the workpiece preparation part is installed opposite the work space across the machine main body so as to be along the other side surface out of the left and right side surfaces of the machine main body, and
wherein a dimension of the work space in terms of a direction from the front side surface toward the rear side surface is set larger than a dimension from the front side surface to a rear end surface of the workpiece preparation part in terms of the direction from the front side surface toward the rear side surface.

A second embodiment of the invention of the present application is a machining line including a plurality of machine tools according to the first embodiment of the invention arranged in parallel.
wherein the machine tools are arranged so that the one side surface of the machine main body of one of the machine tools substantially coincides with a side surface, of the workpiece preparation part of the adjacent machine tool, opposite the work space.

According to the first embodiment of the invention of the present application, since the work space where the operator accesses the machining part is formed by cutting out the corner portion between the front side surface and one side surface out of the left and right side surfaces of the machine main body, it is possible to avoid the interference between an operator who accesses the machining part of the machine main body and an operator who performs a preparation work of a workpiece for the workpiece changing part.

Further, since the work space is reserved by cutting out the corner portion of the machine main body, it is possible to prevent an interval between the machines arranged in parallel from increasing due to the provision itself of the work space.

In providing the workpiece preparation part, the dimension of the work space in terms of the direction from the front side surface toward the rear side surface is set larger than the dimension from the front side surface to the rear end surface of the workpiece preparation part, and therefore, even when the adjacent machine tools are arranged close to each other so that the one side surface of the machine main body of one of the machine tools and the side surface of the workpiece preparation part of the other machine tool substantially coincide with each other as in the second invention of the present application, a space allowing the operator to enter or exit can be reserved between the rear end surface of the workpiece preparation part and the rear end portion of the work space, which can ensure accessibility to rear sides of the workpiece preparation part and the machine main body by the operator.

Further, since the adjacent machine tools can be disposed close to each other as described above, it is possible to prevent the length of the machining line from increasing by an amount more than that directly caused by the provision of the workpiece preparation part.

### BRIEF DESCRIPTION OF THE DRAWINGS

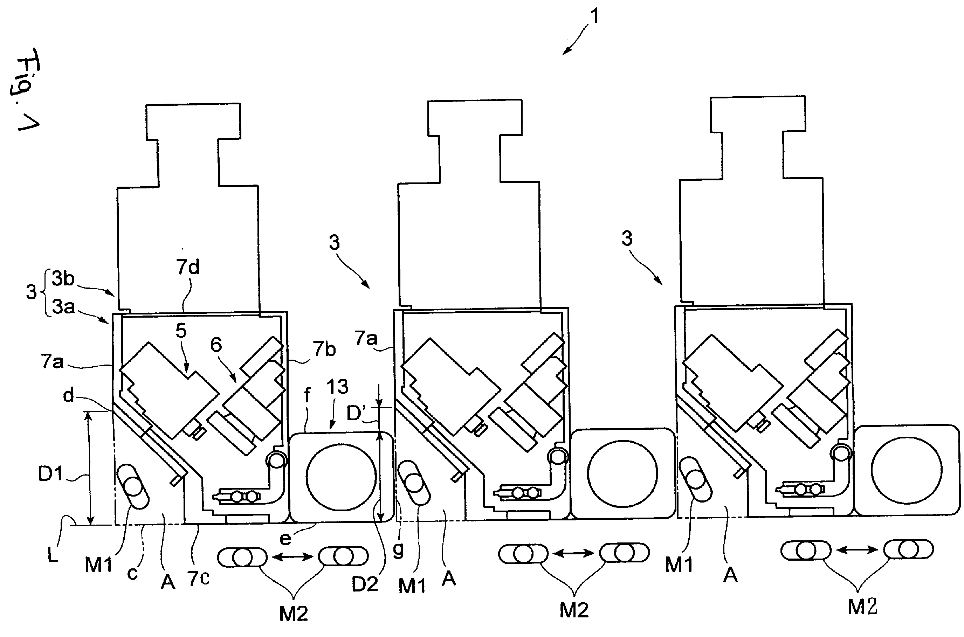

FIG. 1 is a schematic plane view of a machining line in which a plurality of turret lathes according to an embodiment 1 of the present invention are arranged in parallel.

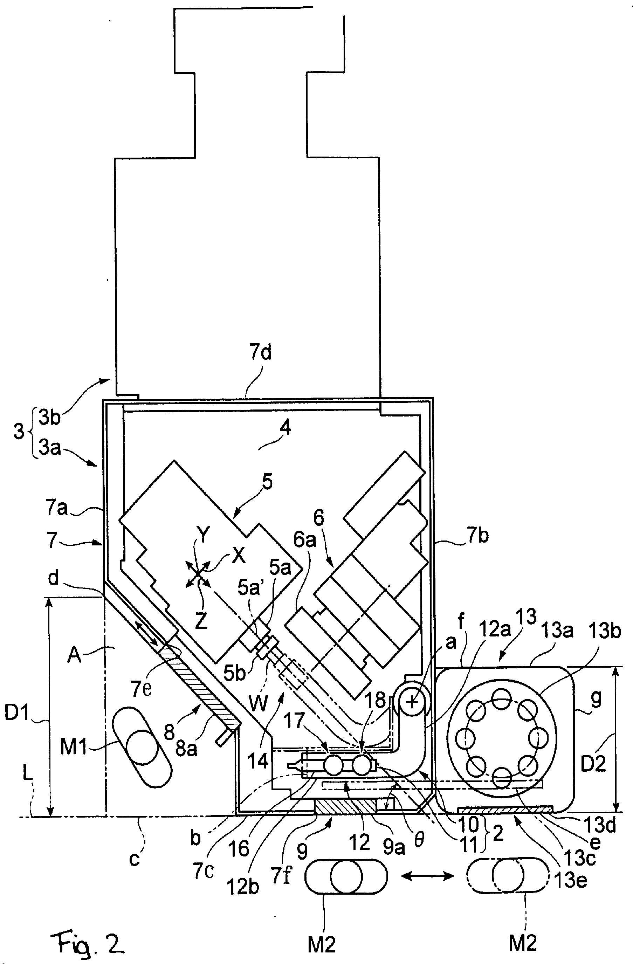

FIG. 2 is a schematic plane view of the turret lathe.

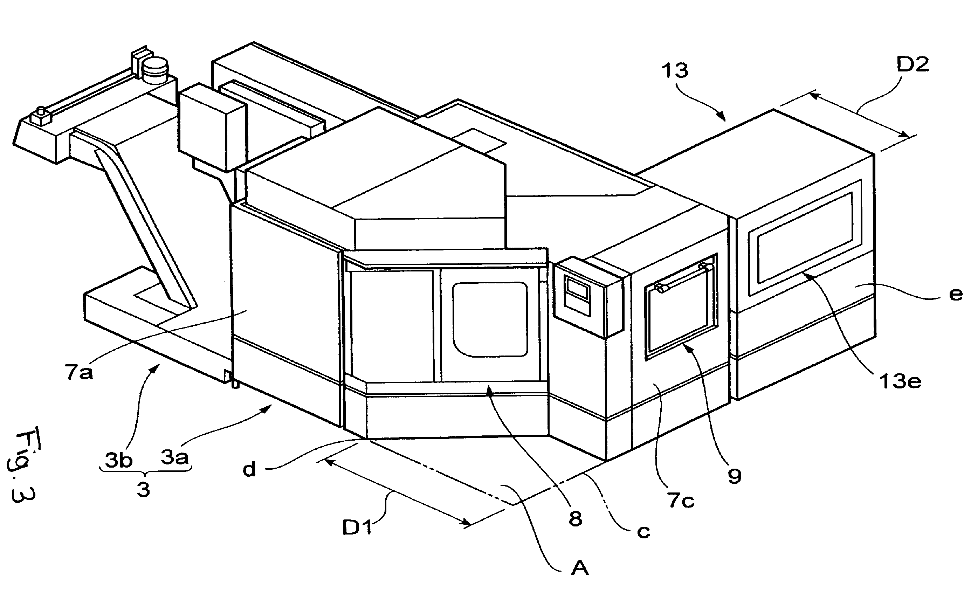

FIG. 3 is a perspective view of the turret lathe.

### DETAILED DESCRIPTION OF THE PREFERRED EMBODIMENT

Hereinafter, an embodiment of the present invention will be described based on the attached drawings.

### [Embodiment 1]

In the drawings, 1 denotes a machining line which sequentially applies lathing, drilling, and so on to one material workpiece to machine it into a finished product workpiece. In this machining line 1, a plurality of turret lathes (machine tools) of this embodiment are arranged in parallel on an installation line L. Note that, in the case of the machining line 1 of this embodiment, the workpiece is delivered between the turret lathes 3, 3 by an operator M2, but the delivery may of course be automated by providing a delivery mechanism.

The turret lathes 3 each have a machine main body 3a and an auxiliary apparatus 3b which performs the supply of a coolant and a motive power to the machine main body 3a, and so on. The machine main body 3a has a machining part 14 which applies machining to the workpiece and a workpiece changing part 2 which changes a machined workpiece in the machining part 14 and an unmachined workpiece. Further, on a side portion of the machine main body 3a, a workpiece preparation part 13 which loads the unmachined workpiece to the workpiece changing part 2 and unloads the machined workpiece from the workpiece changing part 2 is disposed.

Roughly, the machining part 14 has a spindle headstock 5 and a tool post 6 which are disposed on a bed 4, and is surrounded by a rectangular machine cover 7. The spindle headstock 5 is movable in a Z-axis (axis 5a' of a spindle 5a) direction and a Y-axis (up and down) direction perpendicular to the Z axis, and the tool post 6 is movable in an X-axis (front and rear) direction perpendicular to the Z axis and the Y axis.

A chuck 5b which holds the workpiece is disposed at a tip portion of the spindle 5a, and the chuck 5b holds or releases the workpiece by moving a plurality of jaws back or forth in a direction perpendicular to the axis 5a'. Further, at a tip portion of the tool post 6, a turret 6a having many tools is disposed so as to be rotary-indexable. In the machining part 14, for example, the tool of the turret 6a is made to act on the workpiece while the spindle 5a holding the workpiece on the chuck 5b is driven to rotate, whereby the workpiece is machined.

Here, the machine main body 3a is disposed so that the axis 5a' of the spindle 5a makes a predetermined angle 0, in this embodiment 45°, with the installation line L. The machine body cover 7 is formed in a rectangular shape in a planar view, and is disposed so that left and right side surfaces 7a, 7b being its longer sides make 90° with the installation line L, front and rear side surfaces 7c, 7d being its shorter sides become parallel to the installation line L, and the front side surface 7c coincides with the line L.

Further, in the bed 4 and the machine cover 7, a work space A where an operator M1 is located when performing maintenance of the machine main body 3a and so on is formed so as to cut out a corner portion between the front side surface 7c and the left side surface 7a of the rectangle. Further, in the work space A portion of the machine body cover 7, an opening 7e through which the operator M1 accesses the spindle headstock 5, the tool post 6, and so on of the machining part 14 when performing the maintenance of the machine main body 3a and so on is formed, and this opening 7e is opened/closed by a machine body door 8 disposed to be slidable left and right.

Here, a surface that the operator M1 faces when opening/closing the machine body door 8, concretely, an outer surface 8a of the machine body door 8 is parallel to the axis 5a' of the spindle headstock 5.

Further, in a portion, of the machine body cover 7, facing the installation line L, an opening 7f through which the operator M2 accesses the workpiece changing part 2 is formed, and the opening 7f is opened/closed by a workpiece change door 9 disposed to be slidable up and down.

Here, a surface that the operator M2 faces when opening/closing the workpiece change door 9, concretely, an outer surface 9a of the workpiece change door 9 at a closed position makes 45° with the axis 5a' of the spindle headstock 5. Therefore, the outer surface 8a of the machine body door 8 and an extension of the outer surface 9a of the workpiece change door 9 obliquely intersect with each other at a 45° angle.

As described above, the machining line 1 is structured by disposing the machine main bodies 3a so that the outer surfaces 8a of the machine body doors 8 are parallel to one another and the outer surfaces 9a of the workpiece change doors 9 are located on the same straight line.

The workpiece changing part 2 has: a first workpiece changing part 10 turnably supported on the bed 4 of the machine main body 3a; and a second workpiece changing part 11 pivotably supported by the first workpiece changing part 10.

The first workpiece changing part 10 has a structure in which a lateral side portion 12a of a first arm 12 having an L-shape in a planar view is supported so as to be turnable in a horizontal direction around a turn axis a parallel to the Y axis. The second workpiece changing part 11 has: a second arm 16 which is supported by a longitudinal side portion 12b of the first arm 12 so as to be pivotable in a vertical direction around a horizontal axis b; and a machined-workpiece hand 17 and an unmachined-workpiece hand 18 which are disposed on the second arm 16 so as to be capable of gripping a workpiece.

In the workpiece changing part 2, when the machined workpiece is detached from the machined-workpiece hand 17 and the unmachined workpiece is loaded on the unmachined-workpiece hand 18, the first arm 12 of the first workpiece changing part 10 turns in the horizontal direction, and accordingly, the second arm 16 of the second workpiece changing part 11 pivots in the vertical direction, and the both hands 17, 18 move to a position facing the chuck 5b of the spindle 5a, that is, a position at which the former can receive a machined workpiece and the latter can deliver the unmachined workpiece. In this state, the spindle 5a moves in the Z-axis direction and the Y-axis direction, the machined workpiece held by the chuck 5b is transferred to the machined-workpiece hand 17, and subsequently, the unmachined workpiece held by the unmachined-workpiece hand 18 is transferred to the chuck 5b of the spindle 5a.

The workpiece preparation part 13 is disposed opposite the work space A across the machine main body 3a. This workpiece preparation part 13 has: a casing 13a in an angular tube shape; a worktable 13b disposed in the casing 13a so as to be rotatable around a vertical axis; and a load/unload mechanism 13c which loads the unmachined workpiece placed on the worktable 13b to the unmachined-workpiece hand 18 of the workpiece changing part 2 and unloads the machined workpiece loaded on the machined-workpiece hand 17 onto the worktable 13b.

Further, in a front side surface 7c side of the casing 13a, a workpiece load/unload opening 13d is formed, and the opening 13d is opened/closed by a workpiece load/unload door 13e. The operator M2 loads/unloads the unmachined workpiece and the machined workpiece to/from the workpiece changing part 2 from/to the worktable 13b by operating the load/unload mechanism 13c. Note that the operator M2 can also directly access the workpiece changing part 2 from the opening 7f.

Here, a dimension D1 from a front edge c to a rear edge d of the work space A in terms of a direction from the front side surface 7c toward the rear side surface 7d is set larger by D' than a dimension D2 from a front end surface e to a rear end surface f of the workpiece preparation part 13 in terms of the direction from the front side surface 7c toward the rear side surface 7d.

Further, the adjacent turret lathes 3, 3 are arranged so that the left side surface 7a of the machine main body 3a of one of the turret lathes 3 and a side surface g, of the workpiece preparation part 13 of the adjacent turret lathe 3, located opposite the work space A substantially coincide with each other at a position of the installation line L.

As described above, in the machine of this embodiment, since the work space A from which the operator M1 accesses the machining part 14 is formed by cutting out the corner portion between the front side surface 7c and the left side surface 7a of the machine main body 3a, it is possible to avoid the interference between the operator M1 accessing the machining part 14 of the machine main body 3a and the operator M2 accessing the workpiece changing part 2 and the workpiece preparation part 13.

Further, since the work space A is reserved by cutting out the corner portion of the machine main body 3a, it is possible to prevent the interval between the machines arranged in parallel from becoming wide due to the provision itself of the work space A.

Then, in providing the workpiece preparation part 13, the dimension D1 of the work space A in terms of the direction from the front side surface 7c toward the rear side surface 7d is set larger by D' than the dimension D2 from the front end surface e to the rear end surface f of the workpiece preparation part 13. Therefore, even when the adjacent turret lathes 3, 3 are arranged close to each other so that the left side surface 7a of the machine main body 3a of one of the turret lathes 3 and the side surface g of the workpiece preparation part 13 of the other turret lathe 3 substantially coincide with each other at the position on the installation line L, a space D' allowing the operators M1, M2 to enter and exit can be reserved between the rear end surface f of the workpiece preparation part 13 and the rear end portion d of the work space A, so that accessibility to the rear sides of the workpiece preparation part 13 and the machine main body 3a by the operator can be ensured.

Further, since it is possible to dispose the adjacent turret lathes 3, 3 close to each other while ensuring accessibility to the rear sides of the workpiece preparation part 13 and the machine main body 3a as described above, it is possible to prevent the length of the machining line 1 from increasing by an amount more than that directly caused by the provision of the workpiece preparation part 13.

Incidentally, in the above-described embodiment, the case where the workpiece load/unload door 13e is disposed on the front end surface e of the workpiece preparation part 13 is described, but the workpiece load/unload door can be formed on the rear end f of the workpiece preparation part, and in such a case, the operator can easily access the workpiece load/unload door provided on the rear side by passing through the aforesaid space D'.

The present embodiments are therefore to be considered in all respects as illustrative and no restrictive, the scope of the invention being indicated by the appended claims.

## Claims

1. A machine tool comprising:
a machine main body (3a) having a machining part (14) which applies machining to a workpiece and a workpiece changing part (2) which attaches/detaches the workpiece to/from the machining part (14); and
a workpiece preparation part (13) which loads/unloads the workpiece to/from the workpiece changing part (2),
wherein the machine main body (3a) has a roughly rectangular shape having front and rear side surfaces and left and right side surfaces, and has a work space (A) where an operator accesses the machining part (14), **characterised in that** the work space (A) is formed by cutting out a corner portion between the front side surface and one side surface out of the left and right side surfaces,
**in that** the workpiece preparation part (13) is installed opposite the work space (A) across the machine main body (3a) so as to be along the other side surface out of the left and right side surfaces of the machine main body (3a),
and **in that** a dimension of the work space (A) in terms of a direction from the front side surface toward the rear side surface is set larger than a dimension from the front side surface to a rear end surface of the workpiece preparation part (13) in terms of the direction from the front side surface toward the rear side surface.

2. A machining line comprising a plurality of machine tools (3) according to claim 1 arranged in parallel wherein the machine tools (3) are arranged so that the one side surface of the machine main body (3a) of one of the machine tools (3) substantially coincides with a side surface, of the workpiece preparation part (13) of the adjacent machine tool, opposite the work space (A).

## Patentansprüche

1. Werkzeugmaschine, die umfasst:
einen Maschinen-Hauptkörper (3a), der einen Bearbeitungsteil (14), der maschinelles Bearbeiten eines Werkstücks durchführt, sowie einen Werkstück-Wechselteil (2) aufweist, der das Werkstück an/von dem Bearbeitungsteil (14) anbringt/löst; und
einen Werkstück-Vorbereitungsteil (13), der das Werkstück auf den/von dem Werkstück-Wechselteil (2) auflegt/entnimmt,
wobei der Maschinen-Hauptkörper (3a) eine annähernd rechteckige Form mit einer vorderen und einer hinteren Fläche sowie einer linken und einer rechten Fläche hat und einen Arbeitsraum (A) aufweist, in dem eine Bedienungsperson auf den Bearbeitungsteil (14) zugreift, **dadurch gekennzeichnet, dass** der Arbeitsraum (A) ausgebildet wird, in dem ein Eckenabschnitt zwischen der vorderen Fläche und einer Fläche von der linken und der rechten Fläche ausgeschnitten wird,
dadurch, dass der Werkstück-Vorbereitungsteil (13) über den Maschinen-Hauptkörper (3a) dem Arbeitsraum (A) gegenüberliegend so installiert ist, dass er an der anderen Fläche von der linken und der rechten Fläche des Maschinen-Hauptkörpers (3a) liegt,
dadurch, dass eine Abmessung des Arbeitsraums (A) in einer Richtung von der vorderen Fläche zu der hinteren Fläche größer festgelegt ist, als eine Abmessung von der vorderen Fläche zu einer hinteren Fläche des Werkstück-Vorbereitungsteils (13) in der Richtung von der vorderen Fläche zu der hinteren Fläche.

2. Bearbeitungsstraße, die eine Vielzahl von Werkzeugmaschinen (3) nach Anspruch 1 umfasst, die parallel angeordnet sind,
wobei die Werkzeugmaschinen (3) so angeordnet sind, dass sich die eine Seitenfläche des Maschinen-Hauptkörpers (3a) einer der Werkzeugmaschinen (3) im Wesentlichen mit einer Fläche des Werkstück-Vorbereitungsteils (13) der benachbarten Werkzeugmaschine deckt, die dem Arbeitsraum (A) gegenüberliegt.

## Revendications

1. Machine-outil comprenant :
un corps principal de machine (3a) comportant une partie d'usinage (14) qui applique un usinage à une pièce de fabrication et une partie de modification de pièce de fabrication (2) qui attache/détache la pièce de fabrication à/de la partie d'usinage (14) ; et
une partie de préparation de pièce de fabrication (13) qui charge/décharge la pièce de fabrication dans/de la partie de modification de pièce de fabrication (2),
dans laquelle le corps principal de machine (3a) possède une forme grossièrement rectangulaire ayant des surfaces latérales avant et arrière et des surfaces latérales gauche et droite, et comporte un espace de travail (A) où un opérateur accède à la partie d'usinage (14),
**caractérisée en ce que**
l'espace de travail (A) est formé en découpant une partie de coin entre la surface latérale avant et une surface latérale parmi les surfaces latérales gauche et droite,
**en ce que** la partie de préparation de pièce de fabrication (13) est installée à l'opposé de l'espace de travail (A) d'un côté à l'autre du corps principal de machine (3a) de façon à se trouver le long de l'autre surface latérale parmi les surfaces latérales gauche et droite du corps principal de machine (3a),
et **en ce que** la dimension de l'espace de travail (A) en termes de direction de la surface latérale avant vers la surface latérale arrière est réglée de manière à être plus grande que la dimension de la surface latérale avant à la surface latérale arrière de la partie de préparation de pièce de fabrication (13) en termes de direction de la surface latérale avant à la surface latérale arrière.

2. Ligne d'usinage comprenant une pluralité de machines-outils (3) selon la revendication 1, agencées en parallèle
dans laquelle les machines-outils (3) sont agencées de sorte qu'une surface latérale du corps principal de machine (3a) d'une des machines-outils (3) coïncide sensiblement avec une surface latérale de la partie de préparation de pièce de fabrication (13) de la machine-outil adjacente, à l'opposé de l'espace de travail (A).
